(19) Europäisches Patentamt
European Patent Office
Office européen des brevets

(11) Publication number: 0 038 881
A1

(12) EUROPEAN PATENT APPLICATION

(21) Application number: 80301292.1

(22) Date of filing: 22.04.80

(51) Int. Cl.³: C 08 L 75/04
//(C08L75/04, 59/00)

(43) Date of publication of application:
04.11.81 Bulletin 81/44

(84) Designated Contracting States:
DE FR GB IT

(71) Applicant: AMERICAN CYANAMID COMPANY
Berdan Avenue
Wayne New Jersey 06904(US)

(72) Inventor: Megna, Ignazio Salvatore
Woods Road R.D. 2
Lebanon New Jersey(US)

(72) Inventor: Obal, Joseph Anthony
224 Main Street
Sayreville New Jersey(US)

(74) Representative: Allam, Peter Clerk et al,
LLOYD WISE, TREGEAR & CO. Norman House 105-109
Strand
London WC2R 0AE(GB)

# (54) Blends of thermoplastic polyurethane elastomers and acetal resins and articles blow molded therefrom.

(57) Blends of thermoplastic polyurethane elastomers and acetal resins which are useful for blow-molding applications, are disclosed. The acetal resins are homopolymers of formaldehyde or compounds of the structure:

$$-(OCH_2CH_2)_m-(OCH_2)_n-$$

where $\frac{m}{m+n} = 0.05-0.02$

EP 0 038 881 A1

BLENDS OF THERMOPLASTIC POLYURETHANE ELASTOMERS AND ACETAL RESINS AND ARTICLES BLOW MOLDED THEREFROM

Thermoplastic polyurethane elastomers are well-known. They are essentially the 1:1 reaction products of polymeric diols, optionally together with one or more monomeric diols, and aromatic diisocyanates. The polymers generally exhibit outstanding physical properties; however, in blow-molding applications they lack sufficient melt strength at normal blow-molding processing temperatures. For instance, when one attempts to process thermoplastic polyurethanes by blow-molding the hollow segment of extrudate which is to be blown (also known as a parison), instead of hanging from the nozzle, often drops off before blowing can be effected. When attempts are made to blow film, the polymer tends to fold back on the surface of the extrusion die.

The properties and, therefore, the utility of physical blends of polymers are strongly dependent on the degree of compatibility of the components. A very small number of amorphous polymer pairs are thermodynamically compatible, i.e., truly soluble in each other. Blends which display an intermediate degree of compatibility, i.e., between incompatible and completely or thermodynamically compatible, also are known to exist. These systems are called "mechanically" compatible or semi-compatible. Examples include a blend of a butadiene-acrylonitrile copolymer and a styrene-acrylonitrile copolymer (known as ABS resin) and a blend of polystyrene and SBR rubber (known as impact polystyrene). These blends are essentially identical to the incompatible blends in their thermal behavior, i.e., they display two major glass trasit-

ion temperatures (Tg). However, their morphology is finer and they are more translucent. They display a higher degree of interphase adhesion, which is reflected in improved mechanical properties, e.g., melt strength, see Noshay and McGrath, Block Copolymers: Overview and Critical Survey, Acedemic Press, N. Y. 1977, pages 1-10.

In accordance with the present invention, it has been discovered that blends of from about 80-98%, preferably about 80-95% of a thermoplastic polyurethane elastomer and from about 2 to 20 percent by weight, preferably about 5 to 12 percent by weight, of a polyformaldehyde or an acetal resin of the formula

$$-(OCH_2CH_2)_m-(OCH_2)_n \qquad (I)$$

wherein $\frac{m}{m+n}=0.05-0.2$, are readily blow-molded at conventional processing temperatures. The acetal resins of Formula I are copolymers of a minor amount of ethylene oxide and a major amount of formaldehyde.

## The Thermoplastic Polyurethane Elastomers

The thermoplastic polyurethane elastomers which are useful in making the blow-moldable blends of the invention comprise the reaction products of about one molar proportion of a polymeric glycol, preferably having a molecular weight of from about 400 to 3000, optionally from about 1 to 10 molar proportions of one or more low-molecular weight aliphatic diols, preferably saturated, and an aromatic diisocyanate in an amount sufficient to react with essentially all of the hydroxyl groups of the polymeric glycol and the optional aliphatic diols, i.e., the ratio of total isocyanate groups (NCO) to the total hydroxyl groups (OH) ranging from about 0.95 to about 1:1.

The polymeric glycols which are useful in making the thermoplastic polyurethanes include hydroxyl terminated aliphatic polyesters, derived in known manner from the condensation of an aliphatic dicarboxylic acid, e.g., adipic acid, with a stoichiometric excess of one or more saturated

aliphatic diols, e.g., ethylene glycol, propylene glycol, 1,4-butanediol, and the like; aliphatic polyethers, such as polytetramethylene ether glycol, polypropylene ether glycol, poly(ethylene-propylene)ether glycol, and the like; and polythioethers, derived by the self-condensation of thiodiethanol or the co-condensation of a major proportion of thiodiethanol with a minor proportion of one or more saturated aliphatic diols under the influence of an acidic catalyst, e.g., phosphorous acid. The term "aliphatic diol," as it is used herein, includes dihydroxyalkylated derivatives of difunctional phenols, such as the bis (hydroxyethyl) ether of hydroquinone.

The aromatic diisocyanates which are useful in preparing the thermoplastic polyurethanes include, but are not limited to, the most commonly used aromatic disiocyanates, viz. 2,4- and 2,6-tolylene diisocyanate (and isomeric mixtures thereof), known as TDI, and methylenebis (4-phenyl isocyanate), known as MDI. The preferred aromatic diisocyanate is methylenebis-(4-phenlisocyanate).

The thermoplastic polyurethane elastomers are oftentimes prepared in the presence of a catalyst, e.g., stannous octoate. Other catalysts are known in the art. The polymers are well-known and have been used commercially for some time. They are described, among other places, in Bruins, Polyurethane Technology, Interscience Publishers, pages 198-200, and in Modern Plastics Encyclopedia, Vol. 52, No. 10A, 1975, page 84.

## The Acetal Resins

The acetal resins useful in making the blends of the present invention are paraformaldehydes or compounds of the above formula (I) which may be prepared as described by Dermer and Durr in J. Am. Chem. Soc. 76, 912-913 (1954), and Graham in U.S. Patent 2,394,910 hereby incorporated herein by reference. The preferred acetal resins are homopolymers of formaldehyde and copolymers of ethylene oxide and a source of formaldehyde such as formaldehyde per se, s-trioxane and the like. The general subject of acetal resins is discussed by Bevington in Encyclopedia of Polymer Science and Technology, Volume 1, pages 609-628.

## Preparation of the Blends

The thermoplastic polyurethane elastomer and the acetal resin, optionally along with other conventional additives, such as stabilizers, colorants, carbon black and other fillers, and the like, may be mixed in conventional manner using conventional mixing and blending equipment, such as:

1. A single screw extruder with a mixing die or mixing torpedo at 380 to 420°F for 1 to 3 minutes.
2. A twin screw continuous mixer-extruder at 350 to 420°F for 1 to 2 minutes in the mixer before extrusion.
3. A standard injection molding machine at 390 to 430°F for 1 to 3 minutes.

The mixed blends are then granulated or pelletized and dried in any convenient manner e.g. at 100 to 120°C for 2 to 3 hours or to a moisture content of less than about 0.06%.

## Blow-Molding of the Blends

The blow-molding art is well-known; see for example Modern Plastics Encyclopedia, Vol. 52, No. 10A, October, 1975, pages 246-255, inclusive. Typically, dried pellets or granules of the resin are fed into an extruder, in which they are melted by application of heat and shear, and the melt is forced through a suitable cored die to form a hollow tube of nearly molten resin, known as a parison. In so-called extrusion blow-molding, this parison is then grasped by a mold which closes over it, and a gas, usually compressed air, is injected into the cavity of the parison, causing the latter to expand against the walls of the mold. The hollow article thus made is then allowed to cool sufficiently so that it can be ejected from the mold without thereby being irreversibly deformed. In injection blow-molding, the parison is injected into a closed mold, which is normally transferred to another station where the parison is blown against the walls of the mold to produce the finished shape of the resinous

(plastic or elastomeric) article. In the examples described below, the machine used was of the extrusion blow-molding type. The results obtainable with injection blow-molding are comparable.

The following examples are set forth for purposes of illustration only and are not to be construed as limitations on the present invention except as set forth in the appended claims. All parts and percentages are by weight unless otherwise specified.

EXAMPLES A, B and C

Preparation of Polythioether-Based Polyurethane Thermoplastic

(A) A mixture of 333 parts of a hydroxyl- terminated polythioether, based on thiodiethanol, having a hydroxyl number of about 56 (number average molecular weight about 2000) and 60 parts of 1,4-butanediol is stirred under nitrogen at about 100°C. Then, 3.5 parts of a processing wax, 2.1 parts of an antioxidant and 0.06 part of adipoyl chloride are added. Methylenebis (4-phenylisocyanate), 212 parts, is then added and rapidly stirred into solution. When all of the diisocyanate is disolved, 0.07 part of stannous octoate catalyst is added and the viscous reaction mixture is rapidly transferred to a stick-resistant glass tray and cured in an oven at 140°C for about 2 hours. The cured elastomer is granulated and dried.

Polyurethane thermoplastics are similarly prepared using (B) a hydroxyl-terminated polyethylene adipate and (C) a hydroxyl-terminated polytetramethylene ether glycol instead of the polythioether, except that the catalyst is not required for the polyether and adipoyl chloride is omitted in using the polyester.

EXAMPLES 1-3

A blend was prepared from 90 parts by weight of the dried, granulated polyurethane of Example A and 10 parts by weight of a high molecular weight acetal resin made by reacting ethylene oxide and formaldehyde ($\frac{m}{m+n}$=.1 of Formula I). The blend was made using a twin screw continuous extruder mixer at 420°F and was pelletized and dried for 2 hours at

420°F and was pelletized and dried for 2 hours at 250°F. The blend had the following properties:

| | |
|---|---|
| Tensile Strength, psi | 4163 |
| Modulus 100%, psi | 1536 |
| Modulus 300%, psi | 2176 |
| Elongation, % | 548 |
| Hardness, Shore D | 46 |
| Break Set, % | 110 |
| Split-tear, pli | 240 |
| Ross-Flex, 2 times cut-growth | $>$1 million cycles |

The pelletized blend was blown into 16-ounce bottles using an Impco A13S blow-molding machine on the following extruder barrel temperature range:

| | |
|---|---|
| Rear | 370 - 380°F |
| Front | 390 - 400°F |
| Die Head | 400 - 410°F |

The blend exhibited outstanding melt-strength and showed virtually no parison sag. Similar results were achieved when the polyurethane of Example A was replaced by the polyurethanes of Examples B and C. By comparison, the polyurethane without any acetal copolymer blended therewith had poor melt-strengths and could not be blown.

EXAMPLES 4-6

Following the procedure of Example A, a polythioether-based thermoplastic polyurethane was prepared by reacting 333 parts of the hydroxy-terminated polythioether, and 79 parts of 1,4-butanediol under nitrogen at about 100°C; the processing wax, antioxidant, adipoyl chloride, and methylene-bis (4-phenylisocyanate) (270 parts) were added thereto as described.

Following the addition of the stannous octoate catalyst, curing, and granulating, blends were prepared containing 90 and 95 parts, by weight, of the dried granulated polyurethane and 10 and 5 parts, by weight, of a polyacetal resin prepared from ethylene oxide and s-trioxane ($\frac{m}{m+n}$=.1 of Formula I), for comparison with the unblended polyurethane.

The compositions had the following physical pro-

perties:

| | Example 4 | Example 5 | Example 6 |
|---|---|---|---|
| % By Weight Polyacetal | 0 | 5 | 10 |
| Hardness, Shore D | 46 | 47 | 49 |
| Modulus, 100%, psi | 1720 | 1403 | 2055 |
| Modulus, 300%, psi | 2800 | 3030 | 3040 |
| Tensile Strength, psi | 4565 | 4590 | 4424 |
| Elongation, % | 475 | 482 | 493 |
| Break Set, % | 85 | 94 | 120 |
| Split-tear, pli | 200 | 190 | 215 |

The pelletized blends of Examples 5 and 6 were blow-molded into 16-ounce bottles using the Impco A13S blow-molding machine with the following extruder barrel temperatures:

| | Example 5 | Example 6 |
|---|---|---|
| Rear | 350 - 370°F | 370°F |
| Front | 360 - 380°F | 390°F |
| Die Head | 360- 380°F | 400°F |

The pelletized polyurethane of Example 4 could not be blow-molded into bottles. The blends of Examples 5 and 6 exhibited improved melt-strengths compared to the polyurethane without any acetal copolymer.

EXAMPLE 7

In the manner described in Examples 4 and 5, a blend was prepared from 97 parts, by weight, of the dried, granulated polyurethane of Example 4 and 3 parts by weight of the polyacetal of Example 5. The pelletized blend was successfully blow-molded into 16-ounce bottles.

EXAMPLE 8

Following the procedure of Example 1, a blend was prepared using 90 parts by weight of a polyurethane, [prepared by reacting one molar proportion of polyethylene adipate (number average molecular weight 2100), 5 molar proportions of 1,4-butane-diol and 6.5 molar proportions of methylenebis(4-phenylisocyanate)], and 10 parts by weight of the polyacetal prepared from ethylene oxide and formaldehyde.

Good bottles were blow-molded using the following extruder barrel temperatures:

| | |
|---|---|
| Rear | 370°F |
| Front | 380°F |
| Die Head | 380°F |

EXAMPLE 9

Following the procedure of Example 1, a blend was prepared using 90 parts by weight of a polyurethane, [prepared by reacting one molar proportion of polytetramethylene ether glycol (number average molecular weight 2000), 6 molar proportions of 1,4-butanediol and 7.35 molar proportions of methylenebis (4-phenylisocyanate)], and 10 parts by weight of the ethylene oxide-formaldehyde polyacetal resin.

Good bottles were blow-molded using the following extruder barrel temperatures:

| | |
|---|---|
| Rear | 390°F |
| Front | 400°F |
| Die Head | 410°F |

EXAMPLE 10

Following the procedure of Example 1, a blend of 90 parts by weight of the dried, granulated polyurethane of Example A and 10 parts by weight of a homopolymer of formaldehyde is prepared and blown into 16-ounce bottles on the following extruder barrel temperature range:

| | |
|---|---|
| Rear | 375 - 385°F |
| Front | 395 - 405°F |
| Die Head | 405 - 415°F |

Results similar to those set forth in Examples 1-3 are obtained.

EXAMPLE 11

When the 1,4-butanediol of Example A was eliminated from the reaction thereof and the resultant polyurethane was blended with 20% of the polyacetal of Example 1, excellent blow-molded bottles were produced.

EXAMPLE 12

A polyacetal produced from ethylene oxide and formaldehyde ($\frac{m}{m+n}$=.05 of Formula I) was blended with the poly-

urethane of Example B. Again, excellent results were achieved.

EXAMPLE 13

The procedure of Example 9 was again followed except that the number average molecular weight of the polytetramethylene ether glycol was about 400. Similar results were achieved when 15% of the polymer of Example 10 was blended therewith.

EXAMPLE 14

The procedure of Example 8 was again followed except that the polyethylene adipate had a number average molecular weight of about 3000. When it was blended with a polyacetal prepared from ethylene oxide and formaldehyde wherein $\frac{m}{m+n}=0.2$ of Formula I, an excellent blow-molded bottle was produced.

EXAMPLE 15

The procedure of Example A was again followed except that the 1,4-butanediol was replaced by the bis (2-hydroxy-ethyl) ether of hydroquinone. When the resultant polyurethane was blended with the polyacetal of Example 1, similar blow-molded bottles were produced.

CLAIMS:

1. A polymer blend consisting essentially of (A) about 80-98 percent by weight of a thermoplastic polyurethane elastomer, said elastomer comprising the product of reaction of about one molar proportion of a polymeric glycol selected from polyester glycols, polyether glycols and polythioether glycols, optionally from about 1 to 10 molar proportions of one or more low-molecular-weight aliphatic diols, and sufficient aromatic diisocyanate to react with essentially all of the hydroxyl groups of said polymeric glycol and said aliphatic diol, and (B) about 2-20 percent by weight of polyformaldehyde or an acetal resin of the structure

$$-(OCH_2CH_2)_m-(OCH_2)_n-$$

wherein $\frac{m}{m+n} = 0.05-0.2$.

2. A blend according to Claim 1, wherein said polyurethane elastomer is prepared from a polythioether glycol.

3. A blend according to Claim 1, wherein said polyurethane elastomer is prepared from a polyester glycol.

4. A blend according to Claim 1, wherein said polyurethane elastomer is prepared from a polyether glycol.

5. A blend according to any preceding claim, wherein said aromatic diisocyanate is methylenebis (4-phenylisocyanate).

6. A blend according to any preceding claim, consisting essentially of 88-95 weight percent of said thermoplastic polyurethane and 5-12 weight percent of said polyformaldehyde or of an acetal resin prepared by reacting ethylene oxide and a source of formaldehyde.

7. A blend according to Claim 6, wherein the source of formaldehyde is formaldehyde *per se*.

8. An article formed by blow-molding a polymer blend as defined in any preceding claim.

LLOYD WISE, TREGEAR & CO.
NORMAN HOUSE 105-109 STRAND,
LONDON, WC2R 0AE

European Patent Office

# EUROPEAN SEARCH REPORT

0038881

Application number

EP 80301292.1

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | FR - A - 2 065 515 (CELANESE)<br>+ Totality +<br>---- | 1-7 | C 08 L 75/04 //<br>(C 08 L 75/04<br>C 08 L 59/00) |
| | | | **TECHNICAL FIELDS SEARCHED (Int.Cl. 3)** |
| | | | C 08 L 75/00<br>C 08 L 59/00 |
| | | | **CATEGORY OF CITED DOCUMENTS**<br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| X | The present search report has been drawn up for all claims | | &: member of the same patent family, corresponding document |

| Place of search | Date of completion of the search | Examiner |
|---|---|---|
| VIENNA | 11-12-1980 | WEIGERSTORFER |

EPO Form 1503.1 06.78